**Europäisches Patentamt**

**European Patent Office**

**Office européen des brevets**

(19)

(11) Veröffentlichungsnummer : **0 412 181 B1**

(12)   # EUROPÄISCHE PATENTSCHRIFT

(45) Veröffentlichungstag der Patentschrift :
28.10.92 Patentblatt 92/44

(51) Int. Cl.⁵ : **G01D 5/14**

(21) Anmeldenummer : **89114590.6**

(22) Anmeldetag : **07.08.89**

(54) Anordnung zur Erfassung der Drehstellung eines Rotationskörpers.

(43) Veröffentlichungstag der Anmeldung :
**13.02.91 Patentblatt 91/07**

(45) Bekanntmachung des Hinweises auf die
Patenterteilung :
**28.10.92 Patentblatt 92/44**

(84) Benannte Vertragsstaaten :
**DE FR GB IT SE**

(56) Entgegenhaltungen :
**WO-A-89/00702**
**DE-U- 8 806 215**

(56) Entgegenhaltungen :
**US-A- 3 835 373**
**IBM TECHNICAL DISCLOSURE BULLETIN,**
**Band 27, Nr. 2, Juli 1984, Seite 1195, New York,**
**US ; B.M. GRIFFING : "Non-contact analogro-**
**tary position sensor"**

(73) Patentinhaber : **SIEMENS**
**AKTIENGESELLSCHAFT**
**Wittelsbacherplatz 2**
**W-8000 München 2 (DE)**

(72) Erfinder : **Vollmer, Rolf**
**Weihersberg 4**
**W-6416 Poppenhausen (DE)**

**Beschreibung**

Die Erfindung betrifft eine Anordnung zur Erfassung der Drehstellung eines Rotationskörpers gemäß dem Oberbegriff des Anspruchs 1.

Eine solche Anordnung ist durch die US-A-3 835 373 bekannt. Bei dieser Anordnung sind an den freien Enden eines C-förmig ausgebildeten Magneten zwei mit einer halbkreisförmigen Ausnehmung versehene Polstücke als Leitkörper vorgesehen. In die halbkreisförmigen Ausnehmungen ragt als Geberkörper ein mit einem Rotationskörper verbundener Zylinderstab. Im Bereich des einen Leitkörpers ist der Zylinderstab vollzylindrisch und im Bereich des anderen Leitkörpers nur halbzylindrisch ausgebildet. Der zwischen dem vollzylindrischen Teil des Zylinderstabes und dem betreffenden Leitkörper bestehende Luftspalt bleibt unabhängig von einer Dreh- oder Schwenkbewegung stets konstant. Dagegen ändert sich der zwischen dem halbzylindrischen Teil des Zylinderstabes und dem betreffenden Leitkörper bestehende Luftspalt in Abhängigkeit vom Dreh- oder Schwenkwinkel des Zylinderstabes. Diese Änderung des Luftspaltes hat auch eine Änderung des magnetischen Feldes in diesem Luftspalt zur Folge. Mittels eines in diesem Luftspalt angeordneten Hallgenerators wird diese Änderung erfaßt. Die Ausgangsspannung des Hallgenerators wird einem Regler zugeführt, durch dessen Ausgangsspannung der Steuerstrom des Hallgenerators so geregelt wird, daß trotz der Änderung des magnetischen Feldes im Luftspalt die Ausgangsspannung des Hallgenerators konstant bleibt. Die Ausgangsspannung des Reglers ist ein Maß für die Größe des Dreh- bzw. Verstellwinkels des mit dem Rotationskörper verbundenen Zylinderstabes. Diese Ausgangsspannung kann somit zur Steuerung der Drehbewegung des Rotationskörpers herangezogen werden.

Durch das DE-U-88 06 215 ist ein lagecodierter Winkelgeber bekannt, bei dem eine aus einem einheitlichen magnetischen Material gebildete Profilspur mittels entsprechender der Profilspur gegenüberliegender Sensoren abgefragt wird. Zur Bildung einer derartigen Profilspur wird unter anderem auch eine exzentrische Scheibe vorgeschlagen. Das Lagesignal wird aus dem Vergleich der Ausgangssignale der Sensoren gewonnen. Zur Erkennung der jeweiligen Winkellage eines Rotationskörpers sind daher immer mehrere Sensoren erforderlich.

In IBM-Technical Disclosure Bulletin Vol. 27, No. 2, July 1984, Seite 1195 ist ein kontaktloser Analog-Drehstellungsgeber bekannt, der eine spiralförmig ausgebildete, mit dem Rotattionskörper gekoppelte Scheibe aufweist, zu der ein Permanentmagnet gegenüberliegend angeordnet ist. Zwischen der Scheibe und dem Magneten ist ein Hallgenerator eingefügt. Durch die Spiralform der Scheibe bedingt, ändert sich bei einer Rotation der Scheibe ständig die Größe des zwischen dieser und dem Magneten bestehenden Luftspaltes und damit auch die Stärke des in diesem Luftspalt herrschenden magnetischen Feldes. Hierdurch ergibt sich auch eine entsprechende Änderung der Ausgangsspannung des im Luftspalt liegenden Hallgenerators. Über die weitere Auswertung dieser Ausgangsspannung ist in dieser Schrift nichts ausgeführt.

Die internationale Patentanmeldung WO 89/00702 beschreibt einen magnetischen Sensor, bei dem an den Enden eines geraden Jochteils abstehende Außenarme vorgesehen sind. Zwischen den Außenarmen ist ein Mittelarm angeordnet, zwischen dem und dem Jochteil ein Luftspalt vorgesehen ist. In diesen Luftspalt ist ein Magnetfeldindikator eingesetzt. An den freien Enden der Außenarme und desgleichen am freien Ende des Mittelarmes sind zueinander ausgerichtete Magnete angeordnet. Die Magnete sind hinsichtlich ihrer Polarität so ausgerichtet, daß der von dem Magnetpaar des einen Außenarmes und des Mittelarmes ausgehende Fluß im Mittelarm entgegengesetzt zu dem von dem Magnetpaar des anderen Außenarmes und des Mittelarmes ausgehenden Fluß verläuft. Damit wird bei entsprechendem Abgleich der beiden Flüsse das magnetische Feld in den Luftspalt zu Null. Durch Einführen eines mit magnetisch leitfähigen Partikeln versehenen Stoffes in einen der Luftspalte, wird eine Veränderung des magnetischen Feldes in diesem Luftspalt bewirkt. Damit sind die beiden Flüsse in dem Mittelarm nicht mehr gleich groß und es wird dementsprechend durch den Magnetfeldindikator ein Signal geliefert, das der Flußabweichung und somit der im Luftspalt vorhandenen magnetischen Masse proportional ist. Zur Messung einer Drehbewegung ist dieser bekannte magnetische Sensor nicht geeignet.

Zur Steuerung der einzelnen Schaltelemente der elektronischen Kommutierungseinrichtung einer elektrischen Maschine wird ein Rotorlagegeber benötigt (DE-A-36 32 837). Mittels eines solchen Lagegebers wird die jeweilige Stellung des Maschinenläufers erfaßt und dann die dieser Läuferstellung entsprechenden Schaltelemente der elektronischen Kommutierungseinrichtung durchgesteuert.

Der Erfindung liegt die Aufgabe zugrunde, eine Anordnung zur Erfassung der Drehstellung eines Rotationskörpers zu schaffen, die abmessungsmäßig klein und sehr störunempfindlich ist.

Die Lösung der gestellten Aufgabe gelingt durch die im Kennzeichen des Anspruchs 1 angegebenen Merkmale. Bei dieser Anordnung ändert sich durch die exzentrische Anordnung des Geberkörpers während der Rotation desselben die Größe des Meßluftspaltes zwischen dem Geberkörper und dem an seinem Umfang angeordneten Leitkörper. Hierdurch ergibt sich auch eine entsprechende Änderung des von der Erregerspule getriebenen magnetischen Flusses. Dieser Änderung wird der von der Kompensationsspule erzeugte magnetische Fluß durch den Regler derart angepaßt, daß das Magnetfeld in dem Luftspalt, in dem der Magnetfeldindikator angeordnet ist, zu Null kompensiert wird. Der durch den Regler eingestellte Strom der Kompensationsspule ist somit von der jeweiligen Drehstellung des Geberkörpers abhängig, so daß aus ihm mittels der Auswerteinrichtung die jeweilige Drehstellung des Rotationskörpers ermittelt werden kann. Ein solcher Stromausgang des Reglers ist störunempfindlich.

Die abhängigen Ansprüche beschreiben vorteilhafte konstruktive Ausführungsformen der Anordnung. Bei einer nach den Merkmalen des Anspruches 2 ausgestalteten Anordnung ergeben sich für das Sensorsystem Leitkörper mit gleicher konstruktiver Ausführungsform. Dies führt zu Fertigungsvereinfachungen. Eine Anordnung nach Anspruch 3 zeichnet sich durch einen besonders einfachen Geberkörper aus. Die Ausgestaltung der Anordnung gemäß den Merkmalen des Anspruches 4 führt zu einer hohen Empfindlichkeit und damit zu großer Genauigkeit bei der Drehstellungserfassung. Durch die Anordnung von zwei voneinander beabstandeten Sensorsystemen wird eine Erkennung der Drehrichtung des Rotationskörpers möglich.

Durch entsprechende Auswertung des vom Regler gelieferten Signales kann auch die Drehzahl des Rotationskörpers erfaßt werden. Dies geschieht beispielsweise durch Zählen der Maxima oder der NullDurchgänge des Stromsignales, die während einer vorgegebenen Zeiteinheit auftreten sowie durch Abtastung des analogen Signals bei niedrigen Drehzahlen.

Anhand von in der Zeichnung dargestellten Ausführungsbeispielen wird die Erfindung nachfolgend näher beschrieben. Es zeigt:

FIG 1 eine erste konstruktive Ausführungsform einer Anordnung,

FIG 2 eine Seitenansicht des aus zwei Scheibenteilen bestehenden Geberkörpers der Anordnung nach FIG 1,

FIG 3 eine zweite Ausführungsform einer Anordnung,

FIG 4 ein schematisches Schaltbild des das Drehstellungssignal liefernden Regelkreises.

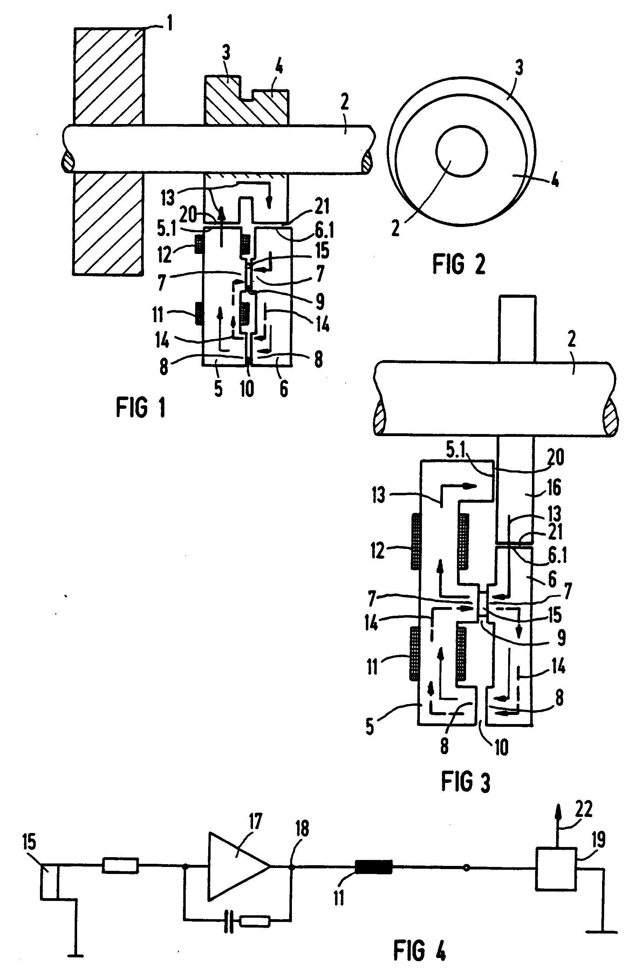

Mit 1 ist ein auf einer drehbaren Welle 2 angeordneter Rotationskörper, der der Läufer einer elektrischen Maschine sein kann, bezeichnet. Auf der Welle 2 ist ferner ein aus zwei Scheibenteilen 3 und 4 bestehender Geberkörper angeordnet. Die beiden Scheibenteile 3 und 4 sind einstückig miteinander verbunden und haben, wie aus der FIG 2 erkennbar, unterschiedliche Durchmesser. Der eine Scheibenteil 3 ist konzentrisch und der andere Scheibenteil 4 exzentrisch auf der Welle 2 angeordnet.

Als Sensorsystem sind zwei Leitkörper 5 und 6 mit ihren Austrittsflächen 5.1 und 6.1 dem Umfang der Scheibenteile 3 und 4 gegenüberliegend angeordnet.

Infolge der konzentrischen Anordnung des Scheibenteiles 3 ergibt sich zwischen diesem und dem entsprechenden Leitkörper 5 ein Übertragungsluftspalt 20, der auch während der Rotation des Scheibenteiles 3 konstant bleibt. Dagegen ändert sich infolge der exzentrischen Anordnung des Scheibenteiles 4 die Größe des zwischen diesem Scheibenteil 4 und der Übertrittsfläche 6.1 des Leitkörpers 6 bestehenden Meßluftspaltes 21 in Abhängigkeit von der Drehstellung des Scheibenteiles 4.

An den Leitkörpern 5 und 6 sind in axialem Abstand zwei seitlich vorstehende Vorsprünge 7 und 8 vorgesehen, zwischen denen jeweils ein definierter Luftspalt 9 bzw. 10 gebildet ist. In dem Bereich zwischen den beiden Vorsprüngen 7 und 8 ist auf dem einen Leitkörper 5 eine Kompansationsspule 11 angeordnet. Auf dem gleichen Leitkörper 5 ist in dem Bereich zwischen dem einen Luftspalt 9 und der Übertrittsfläche 5.1 ferner eine mit einem konstanten Strom gespeiste Erregerspule 12 angebracht. Diese Erregerspule 12 kann auch durch einen Permanentmagneten ersetzt werden. Der von der Erregerspule 12 erzeugte magnetische Fluß nimmt, wie durch voll ausgezogene Pfeile 13 angedeutet, im wesentlichen seinen Weg von dem Leitkörper 5 ausgehend über den zwischen seiner Übertrittsfläche 5.1 und dem Scheibenteil 3 bestehenden Übertragungsluftspalt 20, das Scheibenteil 3, das Scheibenteil 4, den zwischen diesem und der Übertrittsfläche 6.1 des Leitkörpers 6 bestehenden Meßluftspalt 21 und schließt sich über die definierten Luftspalte 9 und 10.

Der von der Kompensationsspule 11 erzeugte magnetische Fluß nimmt seinen Weg im wesentlichen über die beiden definierten Luftspalte 9 und 10 zwischen den Vorsprüngen 7 und 8 der Leitkörper 5 und 6, wie dies durch gestrichelte Pfeile 14 angedeutet ist. In dem einen Luftspalt 9 überlagern sich damit die beiden magnetischen Flüsse in entgegengesetzter Richtung. In diesem Luftspalt 9 ist ein Magnetfeldindikator 15 zur Messung der dort herrschenden magnetischen Induktion angeordnet. Bei umgekehrter Polung der Erreger- oder Kompensationsspule 12 bzw. 11 würde die entgegengesetzte Überlagerung der Flüsse in dem anderen Luftspalt 10 erfolgen, so daß dann der Magnetfeldindikator 15 in diesem Luftspalt 10 anzuordnen wäre.

Bei der in FIG 3 dargestellten Ausführungsform besteht der Geberkörper aus einer exzentrisch auf der Welle 2 angeordneten Scheibe 16. An deren Umfang ist wiederum der eine Leitkörper 6 mit seiner Übertrittsfläche 6.1 gegenüberliegend angeordnet und es wird auf diese Weise wiederum der Meßluftspalt 21 gebildet. Der andere Leitkörper 5 ist so gestaltet, daß seine Übertrittsfläche 5.1 der Seitenfläche der Scheibe 16 gegenübersteht. Hierdurch wird der notwendige konstante Übertragungsluftspalt 20 zwischen dem Leitkörper 6 und der Scheibe 16 erreicht. Dagegen ändert sich die Größe des zwischen der Scheibe 16 und der Übertrittsfläche 6.1 des Leitkörpers 6 bestehenden Meßluftspaltes 21 wegen der exzentrischen Anordnung der Scheibe 16 wiederum in Abhängigkeit von der jeweiligen Drehstellung der Scheibe 16.

Die Anordnung arbeitet wie folgt: Wie bereits beschrieben nimmt der von der Erregerspule 12 erzeugte magnetische Fluß seinen Weg unter anderem über den Meßluftspalt 21 zwischen dem Scheibenteil 4 bzw. der Scheibe 16 und der Übertrittsfläche 6.1 des Leitkörpers 6. Da sich dieser Meßluftspalt 21 während der Rotation des Scheibenteiles 4 bzw. der Scheibe 16 in Abhängigkeit von der jeweiligen Drehstellung dieser Teile ändert, ergibt sich auch eine entsprechende Änderung des magnetischen Flusses in Abhängigkeit von der Drehstellung. Um die magnetische Induktion in dem einen Luftspalt 9 zu Null zu kompensieren, muß der durch die Kompensationsspule 11 fließende Strom entsprechend eingestellt werden. Dies geschieht mittels eines Stromreglers 17, an dessen Regeleingang das Ausgangssignal des im einen Luftspalt 9 angeordneten Magnetfeldindikators 15 liegt. In Abhängigkeit von dessen Ausgangssignal stellt der Stromregler 17 dann den durch die an seinen Ausgang 18 angeschlossene Kompensationsspule 11 fließenden Strom so ein, daß die Induktion in dem einen Luftspalt 9 möglichst Null ist. Der Strom in der Kompensationsspule 11 ist somit der durch die Änderung der Größe des Meßluftspaltes 21 bedingten Flußänderung proportional und kann somit zur Bestimmung der jeweiligen Drehstellung des Rotationskörpers 1 benutzt werden. Der vom Stromregler 17 in die Kompensationsspule 11 eingespeiste Strom wird daher einer Auswerteeinrichtung 19 zugeführt. Das von dieser gelieferte Auswertesignal 22 gibt die jeweilige Drehstellung des Rotationskörpers 1 an. Mit den Auswertesignalen zweier in einem bestimmten Winkelabstand zueinander angeordneten Sensorsystemen ist eine lagerichtige Steuerung der Schaltelemente einer der Maschine zugeordneten elektronischen Kommutierungseinrichtung aus dem Stillstand der Maschine heraus möglich.

Aus dem Stromsignal des Stromreglers 17 kann ferner durch entsprechende Auswertung auch die Drehzahl des Rotationskörpers 1 ermittelt werden. Durch die Anordnung von zwei räumlich zueinander beabstandeten Sensorsystemen ist die Möglichkeit zur Erfassung der Drehrichtung des Rotationskörpers 1 gegeben.

Durch eine entsprechende räumliche Gestaltung des exzentrischen Scheibenteiles 4 können beliebige Formen des Auswertesignales, z.B. Sinusform, Dreieckform und andere erzeugt werden.

## Patentansprüche

1. Anordnung zur Erfassung der Drehstellung eines Rotationskörpers, welche Anordnung einen mit dem Rotationskörper (1) gekoppelten Geberkörper (3,4 bzw. 16) aufweist, dem ein feststehendes Sensorsystem zugeordnet ist, das zwei weichmagnetische, durch ein konstantes Magnetfeld beaufschlagte Leitkörper (5,6) umfaßt, wobei zwischen dem einen Leitkörper (5) und dem Geberkörper (3 bzw. 16) ein konstanter Übertragungsluftspalt (20) besteht und der Geberkörper (4 bzw. 16) im Bereich des anderen Leitkörpers (6) eine geometrische Form aufweist, die zu einer drehwinkelabhängigen Änderung des zwischen dem anderen Leitkörper (6) und dem Geberkörper (4 bzw. 16) bestehenden Meßluftspaltes (21) führt, welche Anordnung ferner mit einem Magnetfeldindikator (15) versehen ist, dessen Ausgangssignal einem Regler (17) zugeführt ist, der eine auf den Magnetfeldindikator (15) wirkende Größe regelt, **dadurch gekennzeichnet,** daß der Geberkörper (3,4 bzw. 16) rotationssymmetrisch ausgebildet und exzentrisch zur Rotationsachse des Rotationskörpers (1) angeordnet ist, daß die Leitkörper (5,6) mechanisch voneinander getrennt sind und an zwei voneinander beabstandeten Stellen definierte Luftspalte (9,10) zwischen den Leitkörpern (5,6) ausgebildet sind, daß ferner die Leitkörper (5,6) mit einer mit konstantem Strom gespeisten Erregerspule (12) sowie mit einer im Bereich zwischen den beiden Luftspalten (9,10) liegenden Kompensationsspule (11) versehen sind, daß der Magnetfeldindikator (15) in dem Luftspalt (9), in dem sich die magnetischen Flüsse der Erreger- und Kompensationsspule (12 und 11) entgegengesetzt überlagern, angeordnet ist, daß der vom Ausgangssignal des Magnetfeldindikators (15) beeinflußte Regler ein Stromregler (17) ist, an dessen Ausgang die Kompensationsspule (11) und eine Auswerteeinrichtung (19) in Reihe angeschlossen sind.

2. Anordnung nach Anspruch 1, **dadurch gekennzeichnet,** daß der Geberkörper aus zwei magnetisch leitend miteinander verbundenen Scheibenteilen (3 und 4) unterschiedlichen Durchmessers besteht, von denen der eine Scheibenteil (3) konzentrisch und der andere Scheibenteil (4) exzentrisch zur Rotationsachse des Rotationskörpers (1) angeordnet ist und jeder Leitkörper (5 bzw. 6) mit seiner Übertrittsfläche (5.1 bzw. 6.1) dem Umfang des betreffenden Scheibenteils (3 bzw. 4) gegenüberliegt.

3. Anordnung nach Anspruch 1, **dadurch gekennzeichnet,** daß der Geberkörper als Scheibe (16) ausgebildet ist, deren Seitenfläche der eine Leitkörper (5) mit seiner Übertrittsfläche (5.1) und deren Umfang der andere Leitkörper (6) mit seiner Übertrittsfläche (6.1) gegenüberliegt.

4. Anordnung nach Anspruch 1,2, oder 3, **dadurch gekennzeichnet**, daß die definierten Luftspalte (9,10) durch voneinander axial beabstandete, zum anderen Leitstück (5 bzw.6) hinragende Vorsprünge (7,8) gebildet sind, wobei die Kompensationsspule (11) in dem Bereich zwischen den beiden Luftspalten (9 und 10) auf einem der Leitkörper (5 bzw.6) und die Erregerspule (12) in einem außerhalb der Luftspalte (9 und 10) zu dem Geberkörper (3,4 bzw.16) hin liegenden Bereich eines der Leitkörper (5 bzw.6) angeordnet ist.

5. Anordnung nach einem oder mehreren der vorhergehenden Ansprüche, **dadurch gekennzeichnet**, daß zwei in einem bestimmten Winkelabstand zueinander angeordnete Sensorsysteme vorhanden sind.

**Claims**

1. An arrangement for detecting the rotary position of a rotational body, which arrangement has a detector body (3 and 4 or 16) coupled to the rotation body (1), to which is allocated a stationary sensor system, which comprises two soft magnetic guide bodies (5, 6) acted upon by a constant magnetic field, wherein between one guide body (5) and the detector body (3 or 16) a constant transmission air gap (20) exists and the detector body (4 or 16) has in the region of the other guide body (6) a geometric form, which leads to a rotation angle-dependent alteration of the measuring air gap (21) existing between the other guide body (6) and the detector body (4 or 16), which arrangement is provided furthermore with a magnetic field indicator (15), the output signal of which is supplied to a controller (17), which regulates a variable acting on the magnetic field indicator (15), characterised in that the detector body (3 and 4 or 16) is formed rotationally symmetrically and eccentrically to the rotational axis of the rotation body (1), in that the guide bodies (5,6) are separated mechanically from each other and formed at two points spaced from each other there are defined air gaps (9,10) between the guide bodies (5,6,), in that furthermore the guide bodies (5,6) are provided with an operating coil (12) fed with a constant current as well as with a compensation coil (11) lying in the region between both air gaps (9,10), in that the magnetic field indicator (15) is arranged in the air gap (9), in which the magnetic flux of the operating and compensation coil (12 and 11) are opposingly superimposed, in that the controller influenced by the output signal of the magnetic field indicator (15) is a current controller (17), at the output of which the compensation coil (11) and an evaluating device (19) are connected in series.

2. An arrangement according to claim 1, characterised in that the detector body consists of two disc parts (3 and 4) of varying diameter, connected to each other in a magnetically conducting manner, one disc part (3) of which is arranged concentrically and the other disc part eccentrically to the rotational axis of the rotational body (1) and each guide body (5 or 6) with its step over face (5.1 or 6.1) opposes the periphery of the respective disc part (3 or 4).

3. An arrangement according to claim 1, characterised in that the detector body is formed as a disc (16), the side face of which is opposite one guide body (5) with its step over face (5.1) and the periphery of which is opposite the other guide body (6) with its step over face (6.1).

4. An arrangement according to claim 1, 2, or 3 characterised in that the defined air gaps (9,10) are formed by projections (7,8) projecting to the other guide part (5 or 6) and axially spaced from each other, wherein the compensation coil (11) is arranged in the region between both air gaps (9 and 10) on one of the guide bodies (5 or 6) and the operating coil (12) is arranged in a region of one of the guide bodies (5 or 6) lying outside the air gaps (9 and 10) towards the detector body (3 and 4 or 6).

5. An arrangement according to one or several of the preceding claims, characterised in that two sensor systems are present arranged relative to each other at a fixed angular distance.

**Revendications**

1. Dispositif pour capter la position de rotation d'un corps de révolution, lequel dispositif comporte un corps initiateur de signaux (3,4 ou 16), qui est accouplé au corps de révolution (1) et auquel est associé un système-capteur fixe, qui comprend deux corps conducteurs (5,6) chargés par un champ magnétique constant, et dans lequel entre un corps conducteur (5) et le corps initiateur de signaux (3 ou 16), il existe un entrefer de mesure de transmission constante (20), et le corps initiateur de signaux (4 ou 16) possède, au voisinage de l'autre corps conducteur (6), une forme géométrique qui conduit, en fonction de la position angulaire, à une modification de l'entrefer de mesure (21), qui est formé entre l'autre corps conducteur (6) et le corps initiateur de signaux (4 ou 16), lequel dispositif est en outre équipé d'un indicateur de champ magnétique (15), dont le signal de sortie est envoyé à un régulateur (17), qui règle une grandeur agissant sur l'indicateur (15) du champ magnétique,
caractérisé par le fait
que le corps initiateur de signaux (3,4 ou 16) est réalisé avec une symétrie de révolution et est disposé d'une manière excentré par rapport à l'axe de rotation du corps de révolution (1), que les corps conducteurs (5,6) sont séparés mécaniquement l'un de l'autre et que des entrefers définis (9,10) sont formés entre les corps conducteurs (5,6) en deux emplacements distants,
qu'en outre les corps conducteurs (5,6) sont pourvus d'une bobine d'excitation (12) alimentée par un courant constant et d'une bobine de compensation (11) située dans la zone comprise entre les deux entrefers (9,10),
que l'indicateur de champ magnétique (15) est disposé dans l'entrefer (9), dans lequel les influences magnétiques de la bobine d'excitation et de la bobine de compensation (12 et 11) se superposent en sens opposés,
que le régulateur influencé par le signal de sortie de l'indicateur du champ magnétique (15) est un régulateur de courant (17), à la sortie duquel sont raccordés, en série, la bobine de compensation (11) et un dispositif d'évaluation (19).

2. Dispositif selon la revendication 1, caractérisé par le fait que le corps initiateur de signaux est constitué de deux éléments de disque (3 et 4) possédant des diamètres différents et reliés entre eux d'une manière magnétiquement conductrice et dont l'un (3) est disposé concentriquement et l'autre (4) d'une manière excentrée par rapport à l'axe de rotation du corps de révolution (1), et que la surface de passage (5.1 ou 6.1) de chaque corps conducteur (5, 6) est en vis-à-vis du pourtour de l'élément de disque considéré (3, 4).

3. Dispositif suivant la revendication 1, caractérisé par le fait que le corps initiateur de signaux est réalisé sous la forme d'un disque (16), en vis-à-vis de la surface latérale duquel est disposée la surface de passage (5.1) d'un corps conducteur (5) et en vis-à-vis de la périphérie duquel est disposée la surface de passage (6.1) de l'autre corps conducteur (6).

4. Dispositif suivant la revendication 1, 2 ou 3, caractérisé par le fait que les entrefers définis (9,10) sont formés par des parties saillantes (7,8) distantes axialement l'une de l'autre et qui pénètrent en direction de l'autre élément conducteur (5 ou 6), la bobine de compensation (11) étant disposée dans la zone située entre les deux entrefers (9 et 10), sur l'un des corps conducteurs (5 ou 6), tandis que la bobine d'excitation (12) est disposée dans une zone de l'un des corps conducteurs (5 ou 6), située à l'extérieur des entrefers (9 et 10) en direction du corps initiateur de signaux (3, 4 ou 16).

5. Dispositif suivant une ou plusieurs des revendications précédentes, caractérisé par le fait qu'il est prévu deux systèmes de capteurs séparés par un écart angulaire déterminée.

FIG 1

FIG 2

FIG 3

FIG 4